# EUROPÄISCHE PATENTSCHRIFT

(11) **EP 0 359 947 B1**
(45) Veröffentlichungstag und Bekanntmachung des Hinweises auf die Patenterteilung: **10.03.1993**
(21) Anmeldenummer: 89113791.1
(22) Anmeldetag: 26.07.1989
(51) Int. Cl.: B60B 37/10, B60B 35/08

(54) **Radlager, vorzugsweise für die Räder eines Müllbehälters**
Wheel bearing, especially for the wheels of a mobile refuse bin
Palier de roue, notamment pour roues d'une poubelle mobile

(30) Priorität: 31.08.1988 DE 3829572; 21.04.1989 DE 3913227
(43) Veröffentlichungstag der Anmeldung: 28.03.1990
(73) Patentinhaber: EDELHOFF POLYTECHNIK GMBH & CO., D-58640 Iserlohn (DE)
(72) Erfinder: Edelhoff, Gustav Dieter, D-5860 Iserlohn (DE)
(74) Vertreter: Gossel, Hans K., Dipl.-Ing.

(56) Entgegenhaltungen:
- EP-A- 0 084 488
- DE-U- 8 632 369
- FR-A- 2 103 756
- FR-A- 2 113 819
- FR-A- 2 554 057
- SE-A- 439 747

## Beschreibung

Die Erfindung betrifft ein Radlager, vorzugsweise für die Räder eines Müllbehälters, bestehend aus einer an einem Fahrgestell bzw. einer Behälterwanne gehalterten Achse, auf der die Nabe des Rades durch ein mit einer arretierenden Schnappverbindung versehenes Halteteil festgelegt ist.

Ein Müllbehälter mit einem Radlager dieser Art ist beispielsweise aus EP-A-0 288 066 bekannt.

Aufgabe der Erfindung ist es, ein einfach aufgebautes und einfach herstellbares Radlager der eingangs angegebenen Art zu schaffen, das sich insbesondere für gering belastete und/oder nur wenig beanspruchte Achsen eignet.

Die SE-A-439 747 zeigt bereits ein Radlager gemäß dem Oberbegriff des Anspruchs 1.

Erfindungsgemäß wird diese Aufgabe bei einem Radlager der gattungsgemäßen Art durch die Merkmale des Anspruchs 1 gelöst. Bei dem erfindungsgemäßen Radlager läßt sich die unmittelbar auf der Achse drehbar gelagerte Nabe des Rades in einfacher Weise auf der Achse dadurch festlegen, daß dem Schaft in die Bohrung eingedrückt wird, bis das verdickte Endteil hinter die Flanke der ringförmigen Stufe schnappend eingreift, so daß die Radnabe auf der Achse durch den scheibenförmigen Kopf des Schaftes festgelegt ist.

Nach einer bevorzugten Ausführungsform ist vorgesehen, daß die ringförmige Flanke der Stufe und/oder die innere Flanke des verdickten Endteils abgerundet oder konusförmig abgeschrägt sind. Diese Ausgestaltung gestattet es, den Schaft unmittelbar oder über das Rad zur Lösung des Rades wieder aus der Bohrung herauszuziehen. Dabei sind die Abschrägungen oder Abrundungen so zu wählen, daß sich der Schaft oder das Rad nur mit einer Gegenkraft abziehen lassen, die ein unbeabsichtigtes Lösen ausschließt.

Nach einer erfinderischen Ausgestaltung ist vorgesehen, daß der verdickte Endteil des Schaftes kegelstumpf- oder konusförmig ausgebildet und die Achse mit einer durchgehenden Bohrung versehen ist. Bei dieser Ausgestaltung läßt sich der das Rad halternde Schaft dadurch lösen, daß ein Werkzeug von der dem Rad gegenüber liegenden Seite in die Bohrung des Schaftes eingeführt und mit diesem der verdickte Endteil des Schaftes in der Weise zusammengedrückt wird, daß sich dieser aus der Bohrung herausziehen läßt. Das den Schaft lösende Werkzeug weist zweckmäßigerweise ein rohrabschnittförmiges Endteil auf, das dann nur auf das konusförmig ausgebildete Endteil des Schaftes aufgesetzt und auf dieses aufgedrückt zu werden braucht, so daß der Endteil durch Eintreten in die Bohrung des Werkzeugs soweit zusammengedrückt wird, daß sich der Schaft aus der Bohrung der Achse mühelos herausziehen läßt. Selbstverständlich ist der Durchmesser der Bohrung des rohrförmigen Endteils des Werkzeug so zu wählen, daß das konusförmige Endteil in der gewünschten Weise zusammengedrückt wird. Um ein gutes Gleiten des aufzudrückenden Werkzeugs auf dem konusförmig verdickten Endteil zu gewährleisten, kann der Rand der Bohrung des Werkzeugs entsprechend abgeschrägt oder abgerundet sein. Wird der konusförmig verdickte Endteil durch ein auf dieses aufgedrücktes Werkzeug mit einer stirnseitigen Bohrung gelöst, kann der Endteil durch eine ringförmige Flanke in den Schaft übergehen, die senkrecht zu dessen Mittellinie verläuft. Eine derartige Flanke verhindert, daß sich das Rad oder der Schaft nur durch auf diese ausgeübten axialen Zug lösen lassen.

Zweckmäßigerweise ist die äußere Stirnseite der Radnabe mit einer zu dem scheibenförmigen Kopf des Schaftes komplementäre Ausnehmung oder Ausdrehung versehen. Diese Ausgestaltung ermöglicht es den scheibenförmigen Kopf in etwa versenkt in der Radnabe anzuordnen, was dem Radlager ein ansehnlicheres Aussehen verleiht.

Zweckmäßigerweise ist die Radnabe auf der Achse zwischen dem Kopf des Schaftes und der Flanke eines Bundes oder einer ringförmigen Stufe festgelegt.

Der Schaft kann in seinem Endbereich mit sich kreuzenden Schlitzen versehen sein, so daß sich vier federnde Schenkel ausbilden, die mit geringerer Kraft auffedern und sich demgemäß auch zum Zweck des Lösens mit geringerer Kraft wieder zusammendrücken lassen.

In weiterer Ausgestaltung der Erfindung ist vorgesehen, daß die Achse in Bohrungen zweier zueinander paralleler Stege des Fahrgestells oder des Behälters gehaltert und an ihrem inneren Ende mit einem radialen stegartigen, zumindest über einen Teil ihres Umfanges verlaufenden Rand versehen ist, der sich als Anschlag gegen den äußeren Rand der Bohrung des inneren Steges anlegt. Auf diese Weise wird die Montage der Achse wesentlich erleichtert.

Nach einer erfinderischen Ausgestaltung ist vorgesehen, daß die Achse mit einer federnden Zunge versehen ist die beim Durchschieben der Achse durch die Bohrung vorzugsweise des inneren, also dem Rad abgewandten Steges niedergedrückt wird und die nach vollständigem Durchschieben wieder auffedert und sich mit der Stirnseite ihres freien Endes arretierend hinter den Rand der Bohrung des Steges legt. Auf diese Weise ist die Achse fest mit dem Fahrgestell oder der Behälterwanne verbunden. Ein Lösen der Achse ist in einfacher Weise durch Niederdrücken der Zunge möglich.

Zweckmäßigerweise ist die Zunge durch einen diese einfassenden Spalt aus dem Mantel der einsteckbaren Achse herausgeschnitten. Zusätzlich kann die Zunge mit einer rampenförmigen Erhöhung an ihrem freien Ende versehen sein, der die Verrastung begünstigt.

In weiterer Ausgestaltung der Erfindung sind die Bohrungen des inneren und äußeren Steges unrund oder mehreckig ausgebildet, wobei die Achse in verrastetem Zustand mit dieseen ein Eingriff gehende komplementäre Profile aufweist. Diese Ausgestaltung gewährleistet, daß die Achse undrehbar in den Bohrungen des inneren und äußeren Haltesteges gehaltert ist. Die Bohrungen können ein etwa quadratisches Profil mit einer abgerundeten Ecke aufweisen.

Die einsteckbare Achse, der mit dieser verrastete Schaft mit Haltekopf und die Radnabe können aus Kunststoff, vorzugsweise Polyethylen, bestehen. Die Teile lassen sich dann in einfacher Weise als Kunststoffspritzgußteile herstellen.

In vorteilhafter Weise ist die Radnabe mit einer metallischen Laufbuchse ausgebildet. Hierdurch kann die durch die Gleitreibung entstehende Wärme besser abgeleitet werden.

Das Radlager wird vor Beanspruchungen infolge Stößen insbesondere dadurch geschützt, daß das gelagerte Rad aus einer Felge besteht, auf die ein Gummireifen aufgezogen ist.

Ein Ausführungsbeispiel der Erfindung wird nachstehend anhand der Zeichnung näher erläutert. In dieser zeigt
Fig. 1 einen Längsschnitt durch das Rad und Radlager mit in axialer Richtung auseinandergezogenen Einzelteilen,
Fig. 2 eine Draufsicht auf den mit dem Haltekopf versehenen Schaft,
Fig. 3 eine Seitenansicht des inneren die Achse halternden Stegteils, der mit dem Boden der Behälterwanne eines Müllbehälters verbunden ist,
Fig. 4a eine Seitenansicht der einsteckbaren Achse,
Fig. 4b eine perspektivische Ansicht der einsteckbaren Achse und
Fig. 5 eine Draufsicht auf die Achse in Richtung des Pfeils A.

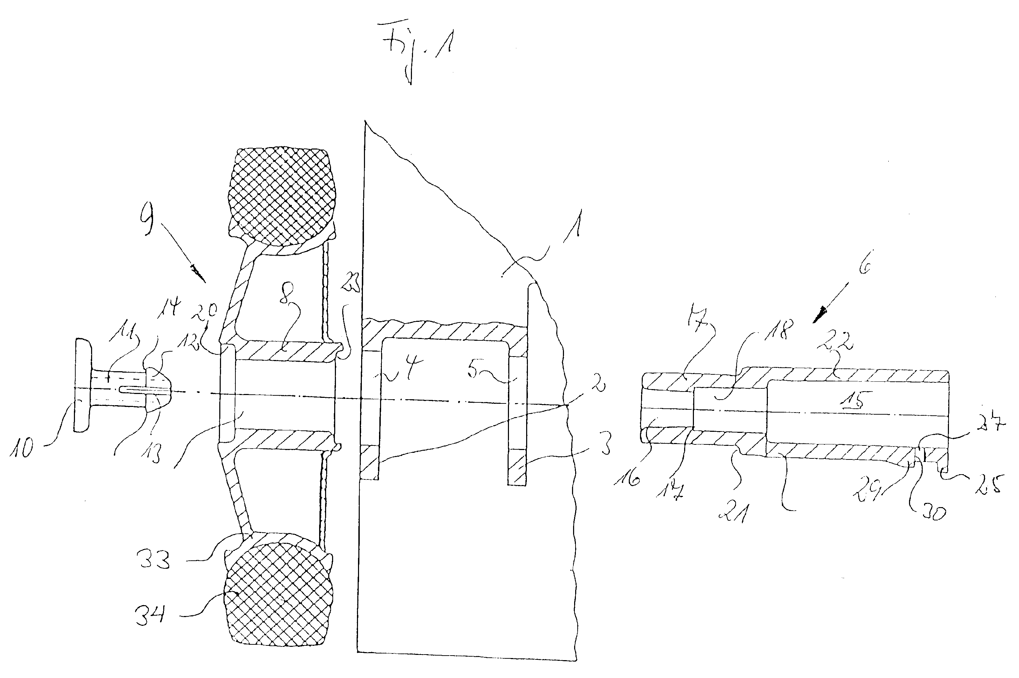

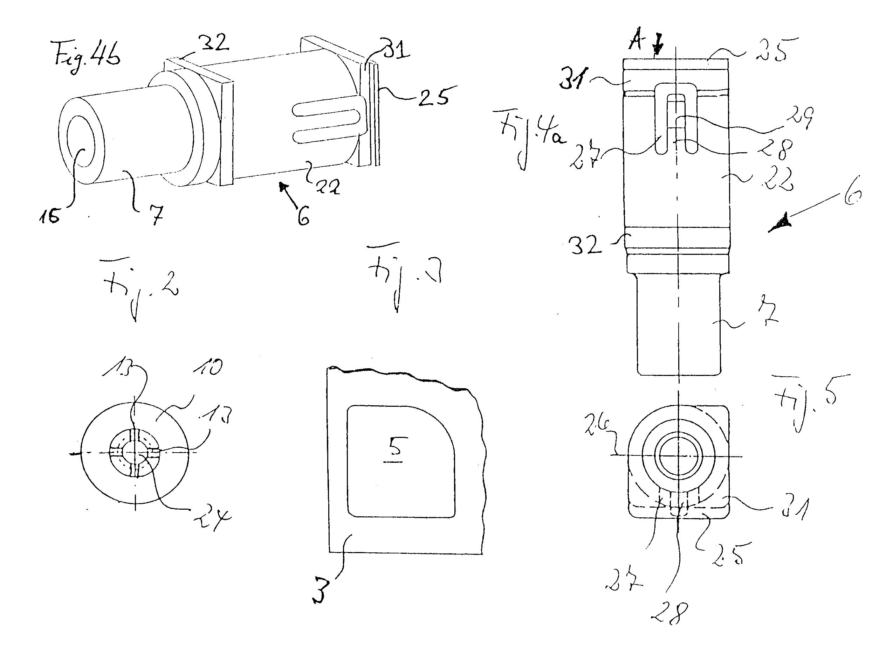

Der in Fig. 1 nur ausschnittweise dargestellte Boden 1 einer Behälterwanne eines Müllbehälters aus Kunststoff ist mit zwei zueinander parallelen und im Abstand voneinander angeordneten Haltestegen 2, 3 versehen. Der äußere Haltesteg 2 und der innere Haltesteg 3 sind mit je einer quadratischen Bohrung 4 bzw. 5 mit einer abgerundeten Ecke versehen, wie sie aus Fig. 3 ersichtlich ist. In den Bohrungen 4, 5 ist die ebenfalls aus einem Kunststoffspritzgußteil bestehende Achse 6 gehaltert. Die Achse 6 überragt im in die Bohrungen 4, 5 eingeschobenen Zustand mit ihrem Achszapfen 7 den Steg 2 nach außen. Auf dem Achszapfen 7 ist die Nabe 8 des Rades 9 unmittelbar drehbar gelagert. Die Nabe 8 und der einstückig mit dieser verbundene Felgenteil des Rades 9 kann ebenfalls aus einem Kunststoffspritzgußteil bestehen. Vorzugsweise wird die Gleitfläche der Nabe 8 durch eine in diese eingepreßte oder anderweitig eingepaßte Stahl- oder NE-Buchse gebildet (nicht dargestellt). Dadurch wird eine bessere Wärmeableitung der entstehenden Gleitreibungswärme gewährleistet.

Nachdem die Radnabe 8 auf den Achszapfen 7 der einsteckbaren Achse 6 aufgeschoben worden ist, wird diese auf dem Achszapfen durch den mit dem scheibenförmigen Haltekopf 10 versehenen Schaft 11 gesichert. Der Schaft 11 weist an seinem dem Haltekopf 10 gegenüberliegenden Ende ein verdicktes etwa kegelstumpfförmiges Endteil 12 auf. Dieses Endteil 12 und der Schaft 11 sind mit sich kreuzenden Schlitzen 13 versehen, so daß dadurch vier federnde Schenkel gebildet sind. Das kegelstumpfförmig verdickte Endteil 12 geht über eine radiale ringförmige Schulter 14 unter Bildung einer Ringstufe in den Schaft 11 über.

Die Achse 6 ist mit einer durchgehenden Bohrung 15 versehen. Diese Bohrung 15 besteht im vorderen Endbereich des Achszapfens 7 aus einem Abschnitt 16 mit geringstem Durchmesser. Dieser Abschnitt 16 kann sich nach innen hin auch leicht konusförmig verjüngen. Der Abschnitt 16 geht über eine Stufe 17 in einen Bohrungsabschnitt 18 mit größerem Durchmesser über. Wird der Schaft 11 zur Befestigung des auf dem Achszapfen 7 gelagerten Rades 9 in die Bohrung 15 eingeschoben, werden zunächst die durch die sich kreuzenden Schlitze 13 gebildeten federnden Schenkel zusammengedrückt, bis das verdickte Endteil 12 in den Bohrungsabschnitt 18 der Achse 6 eintritt und die Schenkel dort einschnappend wieder auffedern, wobei sich die ringförmige Flanke 14, die den verdickten Endbereich 12 auf ihrer dem verbreiterten Haltekopf 10 zugewandten Seite abschließt, verrastend hinter die Flanke der ringförmigen Stufe 17 greift.

Die Nabe 8 ist mit einer zu dem verbreiterten Kopf 10 komplementären Einziehung 20 versehen, so daß im montierten Zustand der verbreiterte Kopf 10 in dieser Aussparung 20 liegt.

Der die Radnabe 8 lagernde Achszapfen 7 geht über eine ringförmige Stufe 21 in den im Durchmesser verbreiterten Teil 22 der Achse 6 über. Die Radnabe 8 ist an ihrer rückwärtigen Stirnseite mit einer abgerundeten Gleitflanke 23 versehen, die sich auf der ringförmigen Flanke 21 der Achse 6 im montierten Zustand abstützt.

Wie aus Fig. 2 ersichtlich ist, ist der Schaft 11 mit einer Durchgangsbohrung 24 versehen. die den durch die Schlitze 13 abgeteilten Schenkeln bessere Federungseigenschaften verleiht.

Die in die Bohrungen 4, 5 einsteckbare Achse 6 ist an ihrem hinteren Ende mit einem rechteckigen Stegteil 25 versehen. Dieses Stegteil 25 weist, wie am besten aus Fig. 5 ersichtlich ist, die Breite des Abschnitts 22 der Achse mit größtem Durchmesser auf und erstreckt sich ausgehend von einer Durchmesserlinie 26 radial nach außen, wobei der Steg 25 mit oberem geraden Rand radial den Mantel des zylindrischen Abschnitts 22 der Achse 6 überragt.

Die Verhältnisse sind am besten aus Fig. 5 ersichtlich, die eine Ansicht auf die obere Stirnseite der Achse 6 in Richtung des Pfeils A in Fig. 4a zeigt.

Aus dem Mantel des Abschnitts 22 der Achse 6 ist durch einen U-förmigen Schlitz 27 eine federnde Zunge 28 herausgeschnitten, die an ihrem vorderen Ende mit einem keilförmig ansteigenden rampenförmigen Teil 29 versehen ist. Zwischen der Stirnseite 30 der federnden Zunge 28 und dem endseitigen radialen Stegteil 25 weist der Achszapfen 7 einen Abschnitt 31 mit einem zu der Bohrung 5 des Stegteils 3 komplementären Profil auf.

In in den Bohrungen 4, 5 der Stegteile 2, 3 verrastetem Zustand ist der Rand der Bohrung 5 des Stegteils 3 teilweise zwischen dem Stegteil 25 der Achse 6 und der Stirnseite 30 der federnden Zunge 28 festgelegt. Beim Durchschieben durch die Bohrung 5 wird die federnde Zunge durch deren rampenförmiges Teil 29 einwärts gedrückt bis die federnde Zunge nach vollständigem Durchschieben durch die Bohrung 5 wieder auffedert und sich mit ihrer Stirnseite 30 verrastend an den Rand der Bohrung 5 anlegt.

Die Bohrung 4 entspricht in ihren Abmessungen der Bohrung 5 (vgl. Fig. 3). Sie nimmt in verrastetem Zustand einen Abschnitt 32 auf, der am Achszapfen 7 angeformt ist und ein zu der Bohrung 4 des Stegteils 3 komplementäres Profil aufweist. Um das Durchschieben der Abschnitte 31 und 32 durch die Bohrungen 5 bzw. 4 zu erleichtern, sind diese an ihrer dem Rad 9 zugekehrten Seite angefast (in Fig. 4b nicht dargestellt).

Das in Fig. 1 dargestellte Rad 9 weist eine Felge 33, vorzugsweise eine aus Recyclingmaterial bestehende Kunststoffelge auf. Auf diese ist ein Reifen 34 aufgezogen, der vorzugsweise aus recycelten Altreifenschnitzeln besteht. Ein derartig eingeführtes Rad 9 weist sich durch stoßabsorbierende Wirkung aus, wodurch die Achse weniger stark beansprucht wird.

## Patentansprüche

1. Radlager, vorzugsweise für die Räder eines Müllbehälters, bestehend aus einer an einem Fahrgestell bzw. einer Behälterwanne gehalterten Achse, auf der die Nabe des Rades durch ein mit einer arretierenden Schnappverbindung versehenes Halteteil festgelegt ist, wobei eine Achse (6) vorgesehen ist, die auf ihrer das Rad (9) tragenden Seite mit einer Bohrung (15) versehen ist, wobei in der Bohrung ein mit einem kreisscheibenförmigen Kopf (10) versehener Schaft (11) gehaltert ist, der in der Weise an seinem dem Kopf (10) gegenüberliegenden Ende mit einem verdickten Endteil (12) und mit mindestens einem dieses und mindestens den Endbereich des Schaftes (11) durchsetzenden, längsverlaufenden Schlitz (13) versehen ist, wobei der Endteil (12) nach Einschieben des Schaftes (11) in die Bohrung durch Auffedern der durch den Schlitz (13) gebildeten federnden Schenkel des Schaftes (11) schnappend greift, und wobei der Kopf (10) einen größeren Durchmesser als der äußere die Radnabe (8) lagernde Endbereich (7) der Achse (6) aufweist, so daß der den äußeren stirnseitigen Rand der Nabe (8) zumindest teilweise übergreift, **dadurch gekennzeichnet,** daß die Achse (6) in eine Halterung des Fahrgestells bzw. der Behälterwanne einsteckbar ist, daß die Bohrung (15) zumindest einen äußeren Abschnitt (16) mit geringerem Durchmesser und einen an diesen unter Bildung einer ringförmigen Stufe (17) anschließenden Abschnitt (18) mit größerem Durchmesser aufweist, und daß der Endteil (12) schnappend hinter die ringförmige Flanke (17) der Stufe greift.

2. Radlager nach Anspruch 1, dadurch gekennzeichnet, daß die ringförmige Flanke der Stufe (17) und/oder die innere Flanke des verdickten Endteils (12) abgerundet oder konusförmig abgeschrägt sind.

3. Radlager nach Anspruch 1, dadurch gekennzeichnet, daß der verdickte Endteil (12) des Schaftes (11) kegelstumpfförmig oder konusförmig ausgebildet und die Achse (6) mit einer durchgehenden Bohrung (15) versehen ist.

4. Radlager nach einem der Ansprüche 1 bis 3, dadurch gekennzeichnet, daß die äußere Stirnseite der Radnabe (8) mit einer zu dem scheibenförmigen Kopf (10) des Schaftes (11) komplementären Ausnehmung (20) oder Ausdrehung versehen ist.

5. Radlager nach einem der Ansprüche 1 bis 4, dadurch gekennzeichnet, daß die Radnabe (8) auf der Achse (6) zwischen dem Kopf (10) des Schaftes (11) und der Flanke (21) eines Bundes oder einer ringförmigen Stufe festgelegt ist.

6. Radlager nach einem der Ansprüche 1 bis 5, dadurch gekennzeichnet, daß der Schaft (11) in seinem Endbereich mit sich kreuzenden Schlitzen (13) versehen ist.

7. Radlager nach einem der Ansprüche 1 bis 6, dadurch gekennzeichnet, daß die Achse (6) in Bohrungen (4, 5) zweier zueinander parallelen Stege (2, 3) des Fahrgestells oder des Behälters (1) gehaltert und an ihrem inneren Ende mit einem radialen stegartigen, zumindest über einen Teil ihres Umfangs umlaufenden Rand (25) versehen ist, der sich als Anschlag gegen den äußeren Rand der Bohrung (5) des inneren Steges (3) anlegt.

8. Radlager nach einem der Ansprüche 1 bis 7, dadurch gekennzeichnet, daß die Achse (6) mit einer federnden Zunge (28) versehen ist, die beim Durchschieben der Achse durch die Bohrung (5) vorzugsweise des inneren, also dem Rad abgewandten Steges niedergedrückt wird und die nach vollständigem Durchschieben wieder auffedert und sich mit der Stirnseite (30) ihres freien Endes arretierend hinter den Rand der Bohrung (5) des Steges (3) legt.

9. Radlager nach einem der Ansprüche 1 bis 8, dadurch gekennzeichnet, daß die Zunge (28) durch einen diese einfassenden Spalt (27) aus dem Mantel der einsteckbaren Achse (6) herausgeschnitten ist.

10. Radlager nach einem der Ansprüche 1 bis 9, dadurch gekennzeichnet, daß die Bohrungen (4,5) des äußeren Steges (2) und des inneren Steges (3) unrund oder mehreckig ausgebildet sind und daß die Achse (6) ein im verrasteten Zustand im Bereich der Bohrung (4) liegendes komplementäres Profil (32) und zwischen dem endseitigen Steg (25) und dem Ende der Zunge (28) ein zu der Bohrung (5) komplementäres Profil (31) aufweist.

11. Radlager nach einem der Ansprüche 1 bis 10, dadurch gekenn zeichnet, daß die Bohrungen (4 ,5) ein etwa quadratisches Profil mit einer abgerundeten Ecke aufweisen.

12. Radlager nach einem der Ansprüche 1 bis 11, dadurch gekennzeichnet, daß die einsteckbare Achse (6), der mit dieser verrastbare Schaft (11) mit Haltekopf (10) und die Radnabe (8) aus Kunststoff, vorzugsweise Polyethylen bestehen.

13. Radlager nach einem der Ansprüche 1 bis 12, dadurch gekennzeichnet, daß auf der Innenseite der Radnabe (8) eine metallische Laufbuchse angeordnet ist.

## Claims

1. A wheel bearing, mainly for the wheels of a refuse bin, consisting of an axle mounted on a chassis or on the shell of the bin, whereon the hub of the wheel is mounted by means of a retaining part provided with an arresting snap-connection means, wherein provision is made for an axle (6) which is provided on its side carrying the wheel (9) with a bore (15), wherein a shaft (11) provided with a circular disk-shaped head (10) is mounted in the bore, which shaft is in this way provided on its end opposite the head (10) with a thickened end portion (12) and with at least one slot (13) extending in the longitudinal direction and passing at least through the end zone of the shaft (11), wherein the end portion (12), after insertion of the shaft (11) into the bore, snap-engages in the bore by the resilient action of the resilient arms of the shaft (11) that are formed by the slot (13), and wherein the head (10) has a larger diameter than the outer end zone (7) of the axle (6) carrying the wheel hub (8), so that it overlaps at least in part the outer edge of the hub (8) on the front side,
characterized in that,
the axle (6) can be inserted into a mounting of the chassis or of the bin shell, that the bore (15) has at least one outer section (16) with a smaller diameter and a section (18) with a larger diameter following the former, thus forming an annular step (17), and that the thickened end portion (12) snap-engages behind the annular flank (17) of the step.

2. A wheel bearing according to claim 1, characterized in that the annular flank of the step (17) and/or the inner flank of the thickened end portion (12) are rounded off or bevelled into a conical shape.

3. A wheel bearing according to claim 1, characterized in that the thickened end portion (12) of the shaft (11) has a frustoconical or conical shape and that the axle (6) is provided with a through bore (15).

4. A wheel bearing according to one of claims 1 to 3, characterized in that the outer end face of the wheel hub (8) is provided with a recess (20) or turned portion complementary to the disk-shaped head (10) of the shaft (11).

5. A wheel bearing according to one of claims 1 to 4, characterized in that the wheel hub (8) is mounted on the axle (6) between the head (10) of the shaft (11) and the flank (21) of a collar or of an annular step.

6. A wheel bearing according to one of claims 1 to 5, characterized in that the shaft (11) is in its end zone provided with slots (13) crossing each other.

7. A wheel bearing according to one of claims 1 to 6, characterized in that the axle (6) is mounted in holes (4, 5) of two cross members (2, 3) of the chassis or of the bin (1) disposed parallel to each other, and is at its inner end provided with a radial flange-type side (25) extending at least over a part of its circumference, which abuts as a stop against the outer edge of the hole (5) of the inner cross member (3).

8. A wheel bearing according to one of claims 1 to 7, characterized in that the axle (6) is provided with a resilient tongue (28) which, as the axle is pushed through the hole (5) of preferably the inner cross member and therefore remote from the wheel, is pushed down and springs back after the insertion has been completed and positions itself with the end face (30) of its free end with an arresting action behind the edge of the hole (5) of the cross member (3).

9. A wheel bearing according to one of claims 1 to 8, characterized in that the tongue (28) is cut out from the peripheral surface of the insertable axle (6) by means of a gap (27) bordering the tongue.

10. A wheel bearing according to one of claims 1 to 9, characterized in that the holes (4, 5) of the outer cross member (2) and the inner cross member (3) have a nonrounded or polygonal shape and that the axle (6) has a complementary profile (32) lying in the engaged state in the zone of the hole (4) and has, between the end flange (25) and the end of the tongue (28), a profile (31) that is complementary to the hole (5).

11. A wheel bearing according to one of claims 1 to 10, characterized in that the holes (4, 5) have an approximately square profile with a rounded corner.

12. A wheel bearing according to one of claims 1 to 11, characterized in that the insertable axle (6), the shaft (11) with the retaining head (10) engageable therewith and the wheel hub (8) consist of a plastic material, preferably polyethylene.

13. A wheel bearing according to one of claims 1 to 12, characterized in that a metallic bush is arranged on the inner side of the wheel hub (8).

## Revendications

1. Palier de roue notamment pour les roues d'une poubelle, constitué d'un essieu logé sur un support roulant ou une cuve de réservoir sur lequel est monté le moyeu de la roue par un élément de maintien d'un assemblage à enclenchement bloquant, dans lequel est prévu un essieu (6) pourvu sur son côté suportant la roue (9) d'un perçage (15), dans le perçage étant maintenue une tige (11) pourvue d'une tête(10) en forme de disque circulaire et qui présente à son extrémité opposée à la tête (10) de telle manière une pièce extrême épaissie (12) et au moins une fente s'étendant longitudinalement (13) traversant celle-ci et au moins la zone extrême de la tige (11), la pièce extrême (12) après l'insertion de la tige (11), s'enclenche dans le perçage par détente élastique des branches élastiques de la tige (11) formées par la fente (13), et dans lequel la tête (10) présente un diamètre plus grand que la zone extrême externe (7) de l'axe (6) logant le moyeu de roue (8) de façon à recouvrir au moins partiellement le bord externe côté avant du moyeu (8), caractérisé en ce que l'essieu (6) peut être inséré dans un élément de maintien du support roulant ou de la cuve de réservoir, en ce que le perçage (15) présente au moins un tronçon externe (16) d'un diamètre plus réduit et un tronçon (18) d'un diamètre plus grand faisant suite à ce dernier en formant un gradin annulaire (17), et en ce que la pièce extrême (12) s'enclenche derrière le flanc annulaire (17) du gradin.

2. Palier de roue selon la revendication 1, caractérisé en ce que le flanc annulaire du gradin (17) et/ou le flanc interne de la pièce extrême épaissie (12) sont arrondis ou chanfreinés en forme de cône.

3. Palier de roue selon la revendication 1, caractérisé en ce que la pièce extrême épaissie (12) de la tige (11) est réalisée de façon tronconique ou en forme de cône et que l'essieu (6) est pourvu d'un perçage traversant (15).

4. Palier de roue selon l'une des revendications 1 à 3, caractérisé en ce que le côté devant externe du moyeu de roue (8) est pourvu d'un évidement (20) ou alésage complémentaire à la tête en forme de disque (10) de la tige (11).

5. Palier de roue selon l'une des revendications 1 à 4, caractérisé en ce que le moyeu de roue (8) est fixé sur l'essieu (6) entre la tête (10) de la tige (11) et le flanc (21) d'un épaulement ou d'un gradin annulaire.

6. Palier de roue selon l'une des revendications 1 à 5, caractérisé en ce que la tige (11) est pourvue dans sa zone extrême de fentes (13) qui se croisent.

7. Palier de roue selon l'une des revendications 1 à 6, caractérisé en ce que l'essieu (6) est logé dans des perçages (4, 5) de deux ailettes (2, 3) parallèles l'une à l'autre du support roulant ou du réservoir (1) et qu'il est pourvu à son extrémité interne d'un bord (25) radial en forme de nervure, s'étendant au moins sur une partie de son pourtour, qui s'applique en tant que butée contre le bord externe du perçage (5) de l'ailette interne (3).

8. Palier de roue selon l'une des revendications 1 à 7, caractérisé en ce que l'essieu (6) est pourvu d'une languette élastique (28) qui est comprimée lors du passage de l'essieu à travers le perçage (5) de préférence de l'ailette interne détournée de la roue et qui se détend élastiquement après l'achèvement du passage et s'applique par son côté devant (30) de son extrémité libre derrière le bord du perçage (5) de l'ailette (3) de façon à le bloquer.

9. Palier de roue selon l'une des revendications 1 à 8, caractérisé en ce que la languette (28) est découpée par une fente (27) entourant celle-ci de l'enveloppe de l'essieu enfichable.

10. Palier de roue selon l'une des revendications 1 à 9, caractérisé en ce que les perçages (4, 5) de l'ailette externe (2), et de l'ailette interne (3) sont réalisés en faux-rond ou de façon polygonale, et en ce que l'essieu (6) présente un profil complémentaire (32) situé dans l'état verrouillé au voisinage du perçage (4), et entre l'ailette côté extrême (25) et l'extrémité de la languette (28) un profil (31) complémentaire au perçage (5).

11. Palier de roue selon l'une des revendications 1 à 10, caractérisé en ce que les perçages (4, 5) présentent un profil à peu près carré avec un coin arrondi.

12. Palier de roue selon l'une des revendications 1 à 11, caractérisé en ce que l'essieu enfichable (6), la tige (11) verrouillable avec celui-ci avec la tête de maintien (10) et le moyeu de roue (8) sont réalisés en matière synthétique, de préférence en polyéthylène.

13. Palier de roue selon l'une des revendications 1 à 12, caractérisé en ce qu'une boîte de glissement métallique est disposée sur le côté interne du moyeu de roue (8).
